# EUROPEAN PATENT APPLICATION

(11) **EP 4 554 058 A1**
(43) Date of publication of application: **14.05.2025**
(21) Application number: 23208812.0
(22) Date of filing: 09.11.2023
(51) Int. Cl.: H02K 3/26, H02K 16/00, H02K 21/24, H02K 11/33, H02K 16/04

(54) **STATOR SYSTEM FOR AN AXIAL FLUX MACHINE FOR AN AIRCRAFT, AS WELL AS DRIVE TRAIN AND AIRCRAFT EQUIPPED THEREWITH**

(71) Applicant: Airbus S.A.S., 31700 Blagnac (FR)
(72) Inventor: Kapaun, Florian, 82024 Taufkirchen (DE); Galek,Marek, 80335 München (DE)
(74) Representative: OTN Airbus SAS

(57) **Abstract**

In order to improve an axial flux machine (18) for use of on an aircraft, especially for propulsion of an aircraft, and preferably with regard to reliability and redundancy, the invention provides a stator system (24) for an axial flux machine (18) for an aircraft (10), the stator system (24) comprising a plurality of inverters (32.1-32.n) and a stator (34) including a plurality of disks (36.1-36.n) wherein each disk (36.1-36.n) comprises at least one dielectric substrate (38) and at least a one conductive trace (40.1-40.3) included in at least one conductive layer defined by the dielectric substrate (38), the at least one conductive trace (40.1-40.3) forming at least a part of a winding (42.1-42.3) of a at least one phase of the stator (34), wherein each disk (36.1-36.n) is associated and connected to its own inverter (32.1-32.n).

## Description

The invention relates to a stator system for an axial flux machine for an aircraft. Further, the invention relates to an axial flux machine for an aircraft comprising such a stator system. Further, the invention relates to a drive train for an aircraft as well as an aircraft, equipped with such axial flux machine or with such a stator system.

For technical background and terminology, reference is made to the following literature:
[1] Wikipedia, "Axial flux motor" retrieved from https://en.wikipedia.org/w/index.php?title=Axial_flux_motor&oldid=1180167 726 on October 19, 2023;
[2] Wikipedia, "Schiebenlaufermotor", retrieved from https://de.wikipedia.org/w/index.php?title=Scheibenläufermotor&oldid=2358 10678 on October 19, 2023;
[3] US 7 109 625 B1
[4] US 9 859 763 B2,
[5] US 10 170 953 B2
[6] WO 2023/022751 A1

Literatures [1] to [6] disclose several axial flux machines as well as stator systems used therein.

An object of the invention is to improve an axial flux machine stator system for use in aircrafts, especially with regard to reliability and redundancy.

For achieving such object, the invention provides a stator system according to claim 1. An axial flux machine, a drive train, as well as an aircraft equipped with such stator system form the subject-matters of the further independent claims.

Advantageous embodiments are subject-matters of the dependent claims.

The invention provides according to a first aspect thereof Stator system for an axial flux machine for an aircraft, the stator system comprising a plurality of inverters and a stator including a plurality of disks wherein each disk comprises at least one dielectric substrate and at least a one conductive trace included in at least one conductive layer defined by the dielectric substrate, the at least one conductive trace forming at least a part of a winding of a at least one coil of the stator, wherein each disk is associated and connected to its own inverter.

Preferably, each disk comprises at least a first conductive trace included in a first conductive layer defined by a first dielectric substrate, the first conductive trace forming at least a part of one winding of a first coil, a first pole or a first phase of the stator and being connected to a first terminal of the inverter.

Preferably, each disk comprises at least a second conductive trace included in a second conductive layer defined by the first or a second dielectric substrate, the second conductive trace forming at least a part of one winding of a second coil, a second pole or a second phase of the stator and being connected to a second terminal of the inverter.

Preferably, each disk comprises at least a third conductive trace included in a third conductive layer defined by the first, the second or a third dielectric substrate, the third conductive trace forming at least a part of one winding of a third coil, a third pole or a third phase of the stator and being connected to a third terminal of the inverter.

Preferably, the disks are axially stacked one over the other.

Preferably, the stator system further comprises a control unit, for controlling the inverters.

Preferably, the first conductive traces are arranged to form together a first pole or a first phase of the stator, wherein the control unit is configured such that the plurality of inverters power the first conductive traces so that they cooperate to form the first pole or the first phase, respectively.

Preferably, the second conductive traces are arranged to form together a second pole or a second phase of the stator, wherein the control unit is configured such that the plurality of inverters power the second conductive traces so that they cooperate to form the second pole or the second phase, respectively.

Preferably, the third conductive traces are arranged to form together a third pole or a third phase of the stator, wherein the control unit is configured such that the plurality of inverters power the third conductive traces so that they cooperate to form the third pole or the third phase, respectively.

Preferably, each disk comprises a PCB (Printed Circuit Board), especially a multilayer PCB.

Preferably, each disk is powered by a single 3-phase inverter.

Preferably, the respective inverter is arranged on the associated disk. Especially, the components of the inverter are arranged on a PCB constituting the associated disk.

Preferably, the at least one conductive trace comprises at least one loop part for forming a part of a pole of the stator and at least one connection part, especially in form of a circular arc, for connecting the loop part to the inverter, wherein connection parts of a first and a second conductive trace are configured antiparallel to each other.

In some embodiments, at least some of the multiple inverters are connected to each other in parallel.

In some embodiments, at least some of multiple inverters are connected to each other in series.

According to another aspect, the invention provides an axial flux machine for an aircraft, comprising a stator according to any of the aforementioned embodiments and a rotor. Preferably, the axial flux machine is configured as an axial flux motor. Preferably, the rotor is a permanent magnet rotor equipped with permanent magnets.

According to another aspect, the invention provides a drive train for an aircraft comprising such an axial flux motor or a stator system according the any of the aforementioned embodiments. Preferably, the drive train is a drive train of a propulsion system for an aircraft.

According to another aspect, the invention provides an aircraft, comprising a drive train, an axial flux machine, or a stator system according to any of the aforementioned embodiments.

In some embodiments, the aircraft comprises a propulsion element powered by the axial flux machine.

Preferred embodiments of the invention lie within the technical field of power electronics, optimized inverters and drive train systems (electrical machines).

Embodiments of the invention relate to a promising motor technology for future drive systems, the so-called axial flux machines (AFM). In this type of motor (can also be used as generator, e.g., in a generator mode), the magnetic fields run parallel to the axis of rotation. Because of its thin and flat, disk-shaped form, it is also known as a disk or pancake motor.

AFMs have gained popularity in recent years because they can improve energy efficiency and reduce carbon emissions.

AFMs have several advantages over conventional radial flux machines. For example, they have higher power density and efficiency, are more compact, and have a simpler and more robust design. They are also suitable for a wide range of applications, including electric vehicles, wind turbines and robotics.

Embodiments of the invention relate to a combination of a stator of an AFM with an advanced power electronic system. When combined with an advanced power electronics system, as provided in several embodiments of the invention, powertrain efficiency and reliability can be further increased compared to axial flux machines as known in the state of art.

Some embodiments of the invention relate to an axial flux motor with multiple serial and/or parallel connected 3 phase inverters.

Some embodiments of the invention have a system consisting of an axial flux motor built on multilayer PCB-based disks as a stator system. This makes manufacturing simple and very efficient. In some embodiments, in addition, each disk is powered by a single 3-phase inverter. The windings are implemented directly on the low-cost PCB. This allows the total power to be divided into several subsystems.

Serial (increasing the voltage) or parallel (increasing the current) division is easy to realize. The multiple inverter and slice approach provides a high degree of redundancy in the event of a fault.

Preferred embodiments of the invention provide least one, several or all of the following advantages:
- High Power to weight/size ratio due to axial motor principle
- Replacement of standard winding system by multilayer PCB based windings, as result the manufacturing of the stator is easier, cost efficient
- Usage of multiple inverters systems of reduced power (preferably 3 phase inverter systems of reduced power), this leads to
   - enhanced power distribution
   - a redundant system
   - higher efficiency due to low voltage semiconductors
   - high scalability

Preferred embodiments relate to a stator system including a stator made with PCBs, especially multilayer PCBs. Several of these PCBs (stacked structure) can be used to increase the rated power (current and/or voltage) and realize redundancy. Due to the stacking principle, the current in each PCB can be reduced. This enables the use of printed circuit boards even in high-power applications such as in propulsion systems for an aircraft. PCB stacking also allows optimization of the form factor and field shape. Each PCB is supplied by its own electronics (inverter).

Embodiments of the invention are explained below referring to the accompanying drawings in which:
- Fig. 1: is a plan view of an aircraft with a propulsion system having propulsion elements and a drive train including an axial flux machine for powering the propulsion element;
- Fig. 2: a schematic perspective exploded view of an embodiment of the axial flux machine;
- Fig. 3: a schematic side view of a stator system of the axial flux machine according to a preferred embodiment comprising several disks with conductive tracks forming winding parts of coils, poles or phases of the stator and several inverters connected to the disks, especially for powering them;
- Fig. 4: a schematic exploded block diagram view of the stator system of Fig. 3;
- Fig. 5: a plan view onto one of the disks of the stator system;
- Fig. 6: a further view of the stator system of Figs. 3 and 4 wherein a first to third disks are stacked on over the other and wherein the power electronics including the inverters is shown as a block diagram.

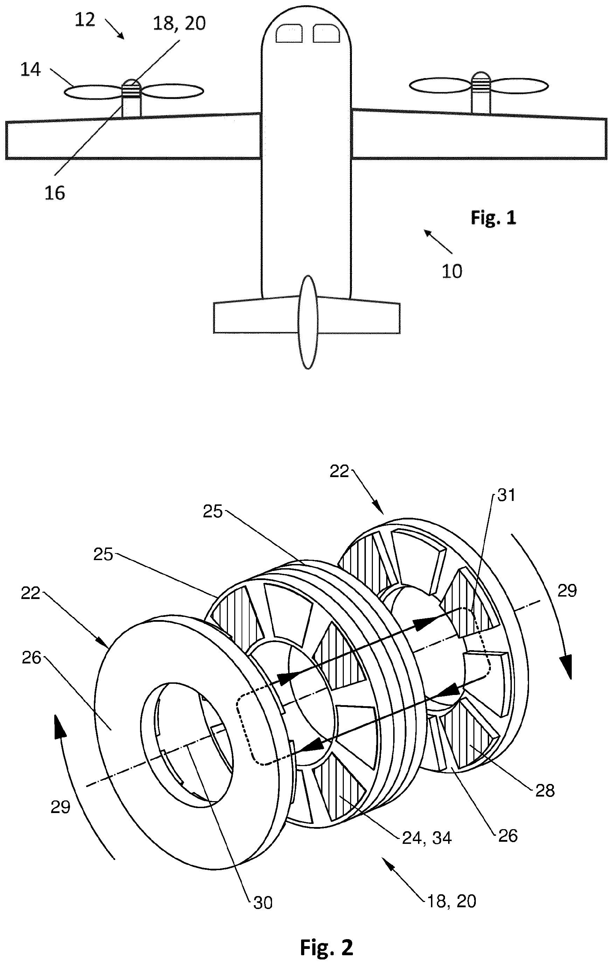

Fig. 1 shows an aircraft 10 including a propulsion system 12. The propulsion system 12 comprises a propulsion element 14 such as a propeller and a drive train 16 for driving the propulsion element 14. The drive train 16 is an electrical drive train and includes an axial flux machine 18 which drives, in a motor mode, as axial flux motor 20 the movement the propulsion element 14. Further, the drive train 16 includes energy sources such as a battery and/or a fuel cell which are generally known and not shown.

Fig. 2 shows an example for the axial flux machine 18. The axial flux machine 18 includes a rotor 22 which is - for the use as shown in Fig. 1 - to be coupled to the propulsion element 14 and a stator system 24 with a stator 34 having several magnetic poles 25.

The rotor 22 includes at least one rotor disk 26 equipped with magnets, such as permanent magnets 28. The permanent magnets 28 are distributed around the axis 30 (i.e., the axis of rotation 29) of the axial flux machine 18 such that adjacent magnets 28 are oriented in opposite directions. A magnetic flux 31 is oriented parallel to the rotation axis 30.

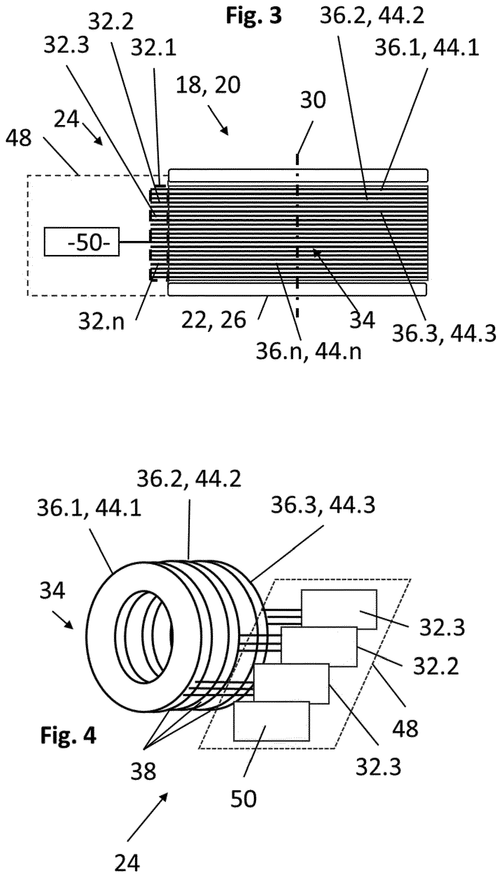

Embodiments of the stator system 24 are shown in Figs. 3, 4 and 6.

Stator system 24 is configured as stator system for the axial flux machine 18 for the aircraft 10, and comprises a plurality of inverters 32.1-32.3 and a stator 34. The stator 34 includes a plurality of disks 36.1-36.3.

In Figs. 3, 4, and 6 a first to third disk 36.1-36.3 are shown, however, it should be clear that the stator 34 may include a larger number of disks stacked on over the other in an axial direction.

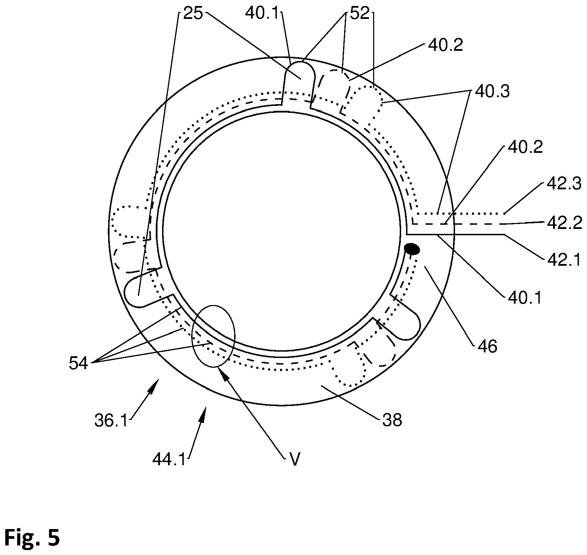

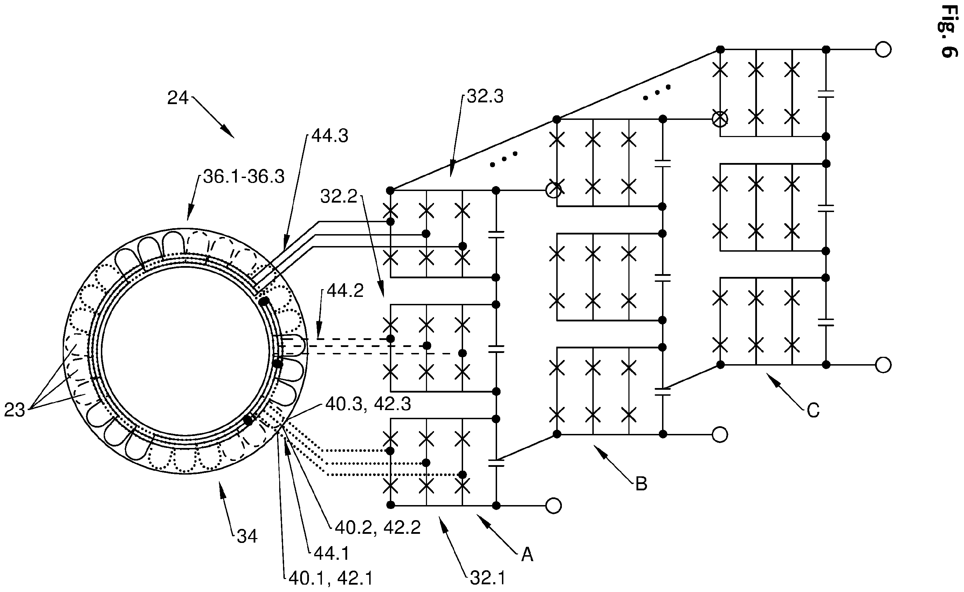

Referring to Fig. 5 which shows an example of a first disk 36.1, each disk 36.1 - 36.3 comprises at least one dielectric substrate 38 and at least one conductive trace 40.1-40.3 included in at least one conductive layer defined by the dielectric substrate 38. The at least one conductive trace 40.1-40.3 forms at least a part of a winding of a at least one coil of the stator 34. Referring to Figs. 3 to 6, each disk 36.1-36.3 is associated and connected to its own inverter 32.1, 32.2, 32.3. In other words, the stator system 24 includes at least one inverter 32.1-32.3 for each disk 36.1-36.3. In the motor mode, the inverters 32.1-32.3 power the at least one conductive trace 40.1-40.3 of the associated 36.1-36.3. Referring to Figs. 3, 4, and 6, a first disk 36.1 is connected to a first inverter 32.1, a second disk 36.2 is connected to a second inverter 32.2, and a third disk 36.3 is connected to a third converter 32.3, and, as indicated in Fig. 6, each further disk 36.n is connected to a further inverter 32.n.

In preferred embodiments, each disk 36.1-36.n includes one conductive trace per phase of the axial flux machine 18. For example, in a three-phase axial flux machine 18 such as a three-phase axial flux motor 20, each disk 36.1-36.n includes a first conductive trace 40.1 for forming a first phase winding 42.1, a second conductive trace 40.2 for forming a second phase winding 42.3, and a third conductive trace 40.3 for forming a third phase winding 42.3. The first conductive trace 40.1 is connected to the first phase terminal of the inverter 32.1-32.n associated to that disk 36.1, 36.2,... or 36.n, the second conductive trace 40.2 is connected to the second phase terminal of that inverter 32.1-32.n, and the third conductive trace 40.3 is connected to the third phase terminal of that inverter 32.1-32.n.

Referring further to Fig. 5, each conductive trace 40.1-40.3 comprises at least one loop part 52 for forming a part of a pole of the stator 34 and at least one connection part 54, especially in form of a circular arc, for connecting the at least one loop part 52 to the associated inverter 32.1-32.n. In the embodiment shown, which shows a first disk 36.1 for a stator for an axial flux machine 18 with nine pole pairs, each of the first to third conductive traces 40.1-40.3 comprises three loop parts 52. Each loop part 52 constitutes a layer of one pole of the stator 34. The three loop parts 52 are connected by connecting parts 54 therebetween which follow a circular path concentric to the axis 30. Referring to the detail V in Fig. 5, connection parts 54 the first to third conductive traces 40.1-40.3 are laid one over the other and connected antiparallel. Thus, the magnetic fields generated by currents through the connecting parts 54 cancel each other out so that there is no or less generation of stray fields.

In preferred embodiments, each disk 36.1-36.n is formed by a PCB 44.1-44.3, especially a multilayer PCB. The conductive trace(s) 40.1-40.3 are each defined in an own conductive layer of the PCB 44.1-44.3. The PCB 44.1-44.3 includes at least one layer of the dielectric substrate 38 and at least one conductive layer defining one of the conductive traces 40.1-40.3. In some embodiments, the PCB 44.1-44.3 includes a first and second conductive layer separated by the at least one dielectric substrate 38. In preferred embodiments, the multilayer PCB includes a first to third conductive layer separated by a first layer and a second layer of the dielectric substrate 38. In some embodiments, each disk 36.1-36.n includes multiple PCBs, and the conductive traces 40.1-40.3 of each disk 36.1-36.n are distributed to these multiple PCBs.

Referring to Fig. 5, the winding system of the stator 34 is based on a PCB 44.1-44.3 having, per phase, one winding 42.1-42.3 defined in one conductive layer of the PCB 42.1-42.3. In the embodiment of Fig. 5, these windings 42.1-42.3 are connected in a star connection or wye connection: one end thereof is connected to the terminals of the associated inverter 32.1-32.n, as mentioned above, while the other ends thereof are connected together in a star point 46.

Referring to Figs. 3, 4, and 6, the stator system 24 includes the stator 34 with the several disks 36.1-36.n, e.g., the several PCBs 44.1-44.3, and power electronics 48.

The power electronics 48 include the plurality of inverters 32.1-32.n supplied with energy from the energy source and a control unit 50 for controlling operation of the inverters 32.1-32.n.

Fig. 6 shows the design of the stator 34 for an axial flux machine 18 with nine pole pairs. The windings 42.1-42.3 of the first PCB 44.1 are connected to the first inverter 32.1, the windings 42.1-42.3 of the second PCB 44.2 are connected to the second inverter 32.2, and the windings 42.1-42.3 of the third PCB 44.3 are connected to the third inverter 32.3. The control unit 50 is configured to control the first to third inverters 32.1-32.3 such that the first phase windings 42.1 of the first, second, and third PCBs 44.1-44.3 cooperate to form a pole pair group of the first phase of the stator 34, the second phase windings 42.1 of the first, second, and third PCBs 44.1-44.3 cooperate to form a pole pair group of the second phase of the stator 34, and the third phase windings 42.1 of the first, second, and third PCBs 44.1-44.3 cooperate to form a pole pair group of the third phase of the stator 34.

In the embodiment shown in Fig. 6, the first to third inverters 32.1-32.3 are connected in series.

In some embodiments, the stator 34 comprises a stacked configuration of several groups A, B, C of first to third PCBs 44.1-44.3 with associated first to third inverters 32.1-32.3 as described before. The different groups A, B, C of first to third inverters 32.1-32.3 are connected in parallel.

Other embodiments of the power electronics 48 may have different connections of the plurality of inverters 32.1-32.n. Components of the power electronics 48 may be provided on the PCBs 44.1-44.3 or in a separate electronic module.

In order to improve an axial flux machine (18) for use of on an aircraft (10), especially for propulsion of the aircraft (10), and preferably with regard to reliability and redundancy, a stator system (24) for an axial flux machine (18) for an aircraft (10) has been described, the stator system (24) comprising a plurality of inverters (32.1-32.n) and a stator (34) including a plurality of disks (36.1-36.n) wherein each disk (36.1-36.n) comprises at least one dielectric substrate (38) and at least a one conductive trace (40.1-40.3) included in at least one conductive layer defined by the dielectric substrate (38), the at least one conductive trace (40.1-40.3) forming at least a part of a winding (42.1-42.3) of a at least one phase of the stator (34), wherein each disk (36.1-36.n) is associated and connected to its own inverter (32.1-32.n).

### Reference sign list:

- 10: aircraft
- 12: propulsion system
- 14: propulsion element
- 16: drive train
- 18: axial flux machine
- 20: axial flux motor
- 22: rotor
- 24: stator system
- 26: rotor disk
- 25: magnetic pole
- 28: permanent magnets
- 29: rotation
- 30: axis
- 32.1: first inverter
- 32.2: second inverter
- 32.3: third inverter
- 32.n: n-th inverter
- 34: stator
- 36.1: first disk
- 36.2: second disk
- 36.3: third disk
- 36.n: n-th disk
- 38: dielectric substrate
- 40.1: first conductive trace
- 40.2: second conductive trace
- 40.3: third conductive trace
- 42.1: first phase winding
- 42.2: second phase winding
- 42.3: third phase winding
- 44.1: first PCB
- 44.2: second PCB
- 44.3: third PCB
- 46: star point
- 48: power electronics
- 50: control unit
- 52: loop part
- 54: connection part
- A: first group
- B: second group
- C: third group

## Claims

1. Stator system (24) for an axial flux machine (18) for an aircraft (10), the stator system (24) comprising a plurality of inverters (32.1-32.n) and a stator (34) including a plurality of disks (36.1-36.n) wherein each disk (36.1-36.n) comprises at least one dielectric substrate (38) and at least a one conductive trace (40.1-40.3) included in at least one conductive layer defined by the dielectric substrate (38), the at least one conductive trace (40.1-40.3) forming at least a part of a winding (42.1-42.3) of a at least one phase of the stator (34), wherein each disk (36.1-36.n) is associated and connected to its own inverter (32.1-32.n).

2. Stator system (24) according to claim 1, wherein each disk (36.1-36.n) comprises at least one of
2.1 at least a first conductive trace (40.1) included in a first conductive layer defined by a first dielectric substrate, the first conductive trace (40.1) forming at least a part of one winding of a first coil, pole or phase of the stator and being connected to a first terminal of the inverter (32.1-32.n);
2.2 at least a second conductive trace (40.2) included in a second conductive layer defined by the first or a second dielectric substrate, the second conductive trace (40.2) forming at least a part of one winding of a second coil, pole or phase 32. n of the stator (34) and being connected to a second terminal of the inverter (32.1-32.n);
2.3. at least a third conductive trace (40.3) included in a third conductive layer defined by the first, the second or a third dielectric substrate, the third conductive trace (40.3) forming at least a part of one winding of a third coil, pole or phase of the stator (34) and being connected to a third terminal of the inverter (32.1-32.n).

3. Stator system (24) according to claim 2, wherein the disks (36.1-36.n) are axially stacked one over the other, wherein the stator system (24) further comprises a control unit (50) for controlling the inverters (32.1-32.n), wherein
3.1 the first conductive traces (40.1) are arranged to form together a first pole or a first phase of the stator (34), wherein the control unit (50) is configured such that the plurality of inverters (32.1-32.n) power the first conductive traces (40.1) so that they cooperate to form the first pole or phase of the stator (34); or
3.2 the second conductive traces (40.2) are arranged to form together a second pole or second phase of the stator (34), wherein the control unit (50) is configured such that the plurality of inverters (32.1-32.n) power the second conductive traces (40.2) so that they cooperate to form the second pole or phase of the stator (34); or
3.3 the third conductive traces (40.3) are arranged to form together a third pole or phase of the stator (34), wherein the control unit (50) is configured such that the plurality of inverters (32.1-32.n) power the third conductive traces (40.3) so that they cooperate to form the third pole or phase of the stator (34).

4. Stator system (24) according to any of the preceding claims **characterized in that** each disk (36.1-36.3) comprises at least one PCB (44.1-44.3), especially a multilayer PCB (44.1-44.3).

5. Stator system (24) according to any of the preceding claims, wherein each disk (36.1-36.n) is powered by a single 3-phase inverter (32.1-32.n).

6. Stator system (24) according to any of the preceding claims, wherein the respective inverter (32.1-32.n) is arranged on the associated disk (36.1-36.n) or in a separate power electronic (48) module connected to the arrangement of disks (36.1-36.n).

7. Stator system (24) according to any of the preceding claims wherein the at least one conductive trace (40.1-40.3) comprises at least one loop part (52) for forming a part of a pole of the stator (34) and at least one connection part (54), especially in form of a circular arc, for connecting the loop part (52) to the inverter (32.1-32.n), wherein connection parts (54) of a first and a second conductive trace (40.1, 40.2) are configured antiparallel to each other.

8. Stator system (24) according to any of the preceding claims wherein at least some of the plurality of inverters (32.1-32.n) or subgroups of the inverters (32.1-32.n) are connected in parallel.

9. Stator system (24) according to any of the preceding claims wherein at least some of the plurality of inverters (32.1-32.n) or subgroups of the inverters (32.1 - 32.n) are connected in series.

10. Axial flux machine (18), especially axial flux motor (20), for an aircraft (10), comprising a stator system (24) according to any of the preceding claims and a rotor (22), especially a permanent magnet rotor.

11. Drive train (16) for an aircraft (10), especially for a propulsion system (12) of an aircraft (10), comprising an axial flux machine (18) according to claim 10 and/or a stator system (24) according to any of the claims 1 to 9.

12. Aircraft (10), comprising a drive train (16) according to claim 11 or an axial flux machine (18) of claim 10 or a stator system (24) according to any of the claims 1 to 9.

13. Aircraft (10) according to claim 12, comprising a propulsion element (14) powered by the axial flux machine (18).
